# EUROPEAN PATENT APPLICATION

(11) **EP 4 725 630 A2**
(43) Date of publication of application: **15.04.2026**
(21) Application number: 25196267.6
(22) Date of filing: 15.08.2025
(51) Int. Cl.: B23K 1/00, B23K 3/04

(54) **BRAZING SYSTEM**

(30) Priority: 20.08.2024 US 202463685022 P; 21.03.2025 US 202519086395
(71) Applicant: Lincoln Global, Inc., Cleveland, OH 44117 (US)
(72) Inventor: WILSON, Mark J., Killen, AL35645 (US); LAWSON, Edwin B., Florence, AL 35633 (US); GIANNELLI, Marco, 40057 Granarolo dell'Emilia (IT); PALAC, Adam I., 58-140 Jaworzyna Slaska (PL)
(74) Representative: Hoyng Rokh Monegier B.V.

(57) **Abstract**

A brazing system includes a first brazing torch, a second brazing torch, a third brazing torch, a torch carriage having an actuator system configured to rotate the first brazing torch, the second brazing torch, and the third brazing torch simultaneously from a substantially vertical orientation to a substantially horizontal operation, and a mass flow controller configured to control respective flows of gas to each of the first brazing torch, the second brazing torch, and the third brazing torch. The mass flow controller controls the respective flows of gas based on either a first heating profile for making a single brazed connection using two of the first brazing torch, the second brazing torch, and the third brazing torch, and a second heating profile for making two brazed connections simultaneously using each of the first brazing torch, the second brazing torch, and the third brazing torch.

## Description

### BACKGROUND OF THE INVENTION

### Field of the Invention

The present invention relates to an automated brazing system, and in particular to an automated brazing system for making brazed connections to metal tubes.

### Description of Related Art

Brazing is used to join metal members together with a brazing filler, i.e., a metal or alloy having a lower melting point than the metals to be joined. Brazing typically involves the use of a torch provided with two gasses. One of the gases will include a flammable fuel gas such as LP gas, natural gas, acetylene gas, methane, propane, butane, hydrogen and mixtures and combinations thereof, while the other gas will include a combustion-assisting gas such as oxygen or pressurized air. A mass flow controller having flow control valves can control the flow of the fuel gas and combustion-assisting gas to the torch during a brazing operation.

When making brazed connections, care must be taken to avoid overheating and damaging the components to be joined. This is particularly true when brazing aluminum components together because the melting point of the brazing alloy or filler metal can be close to the melting point of the aluminum components. It is not uncommon for an operator performing manual brazing, in particular an inexperienced operator, to accidentally overheat the braze joint and damage the components. An automated brazing system can eliminate such operator error.

### BRIEF SUMMARY OF THE INVENTION

The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with one aspect of the present invention, provided is a brazing system. The brazing system includes a stand, a table moveable along the stand in a first axial direction, a shuttle movable along the table in a second axial direction toward and away from an object having a first tube extending in the first axial direction, and a second tube adjacent to the first tube and also extending in the first axial direction. The second axial direction is perpendicular to the first axial direction. A torch carriage is positionable along the shuttle in a third axial direction perpendicular to the first direction and the second direction. A first brazing torch is attached to the torch carriage and is configured for making a first brazed connection along the first tube. A second brazing torch is attached to the torch carriage and is configured for making a second brazed connection along the second tube while the first brazed connection is made. The table automatically moves back and forth in the first axial direction while the first and second brazed connections are made, to adjust respective positions of the first brazing torch along the first tube and the second brazing torch along the second tube during a brazing operation performed on the object.

In accordance with another aspect of the present invention, provided is a brazing system. The brazing system includes a first brazing torch, a second brazing torch, a third brazing torch, a torch carriage having an actuator system configured to rotate the first brazing torch, the second brazing torch, and the third brazing torch simultaneously from a substantially vertical orientation to a substantially horizontal orientation, and a mass flow controller configured to control respective flows of gas to each of the first brazing torch, the second brazing torch, and the third brazing torch. The mass flow controller controls the respective flows of gas based on either a first heating profile for making a single brazed connection using two of the first brazing torch, the second brazing torch, and the third brazing torch, and a second heating profile for making two brazed connections simultaneously using each of the first brazing torch, the second brazing torch, and the third brazing torch.

In accordance with another aspect of the present invention, provided is a brazing system. The brazing system includes a stand, a table supported by the stand, a shuttle movable along the table in a first direction, a torch carriage positionable along the shuttle in a second direction perpendicular to the first direction, a first brazing torch attached to the torch carriage and configured for making a first brazed connection along a first tube, a second brazing torch attached to the torch carriage and configured for making a second brazed connection along a second tube that is adjacent to the first tube, and a mass flow controller configured to control respective flows of gas to each of the first brazing torch and the second brazing torch. The mass flow controller controls the respective flows of gas based on either a first heating profile for making a single brazed connection using only one of the first brazing torch and the second brazing torch, and a second heating profile for making two brazed connections simultaneously using both of the first brazing torch and the second brazing torch.

In accordance with another aspect of the present invention, provided is a brazing system. The brazing system includes a stand, a table supported by the stand, a shuttle movable along the table in a first direction, a torch carriage positionable along the shuttle in a second direction perpendicular to the first direction, a brazing torch attached to the torch carriage and configured for making a first brazed connection along a tube, and a mass flow controller configured to control a flow of gas to the brazing torch. The mass flow controller controls the flow of gas based on either a first heating profile for making a single brazed connection using only the brazing torch, and a second heating profile for making two brazed connections simultaneously using both of the brazing torch and a second brazing torch.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 shows a brazing system;
FIG. 2 shows a portion of a brazing system;
FIG. 3 shows a portion of a brazing system;
FIG. 4 shows brazing torches;
FIG. 5 shows brazing torches;
FIG. 6 shows a schematic block diagram of a portion of a brazing system;
FIG. 7 shows a heating profile;
FIG. 8 shows a heating profile;
FIG. 9 shows a portion of a part to be brazed;
FIG. 10 illustrates a brazing operation;
FIG. 11 illustrates a brazing operation;
FIG. 12 illustrates a brazing operation;
FIG. 13 illustrates a brazing operation;
FIG. 14 shows a brazing torch;
FIG. 15 shows a portion of a brazing torch;
FIG. 16 shows a portion of a brazing torch;
FIG. 17 shows a portion of a brazing torch;
FIG. 18 shows a brazing torch;
FIG. 19 shows brazing torches;
FIG. 20 shows brazing torches;
FIG. 21 shows a portion of a brazing torch; and
FIG. 22 is a block diagram of an example controller.

### DETAILED DESCRIPTION OF THE INVENTION

The present invention relates to an automated brazing system, and in particular to an automated brazing system for making brazed connections to metal tubes such as aluminum or copper tubes. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

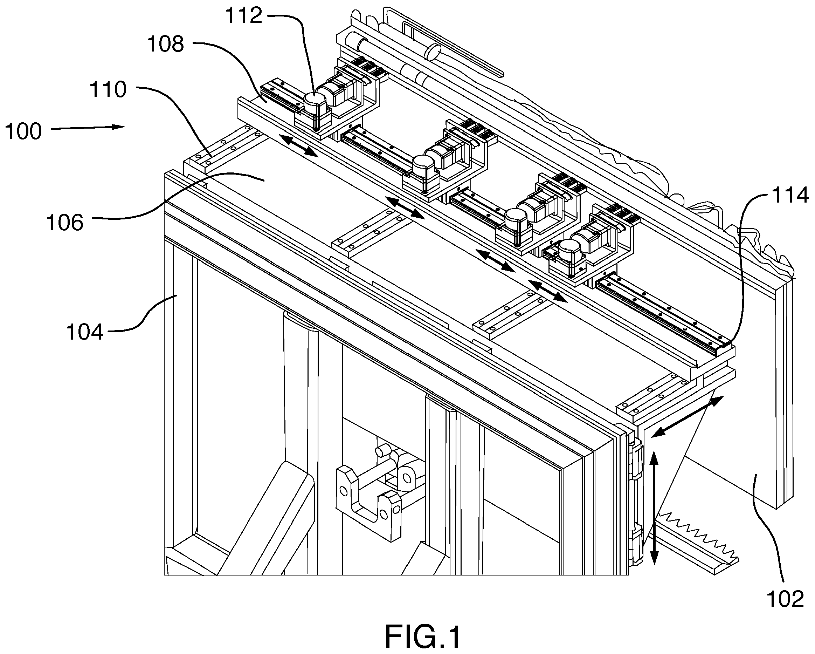

Figure 1 shows a brazing system 100 that automatically makes brazed connections. The brazing system 100 can be part of a larger manufacturing assembly line for producing, for example, heat exchanger coils 102. The brazing system 100 could be configured to automatically make a variety of brazed connections. However, the brazing system 100 discussed herein is particularly suited to making multiple simultaneous brazed connections between metal tubes, such as aluminum or copper tubes.

The brazing system 100 includes a stand 104 or frame to which is attached a table 106. The vertical position of the table 106 along the stand 104 (e.g., along a Z axis or Z axial direction) is adjustable by an actuator (not shown). Example actuators include pneumatic or hydraulic actuators, servo motors, lead or ball screw actuators, and the like. The stand 104 can include vertical tracks on which the table 106 moves up and down along the stand. On top of the table 106, and extending along the length of the table, is a shuttle 108. The shuttle 108 can alternately move toward and away from the heat exchanger 102 (e.g., along a Y axis or Y axial direction that is perpendicular to the Z axis) to respectively engage and disengage the heat exchanger during a brazing process. The shuttle 108 can ride along a series of tracks 110 located atop the table 106 and can be moved by an actuator as discussed above.

A plurality of torch carriages 112 are located on the shuttle 108. In the example embodiment shown in Fig. 1, the brazing system 100 has four torch carriages 112; however, the system could include fewer or more than four torch carriages if desired. The positions of the torch carriages 112 along the shuttle 108 are adjustable (e.g., along an X axis or X axial direction that is perpendicular to the Y and Z axes). The torch carriages 112 can be mounted on a track 114 that extends along the length of shuttle 108. The positions of the torch carriages 112 along the shuttle 108 can be individually adjusted, either manually or automatically via actuators. As will be discussed further below, each torch carriage 112 includes multiple brazing torches that can be controlled to make a single brazed connection or multiple simultaneous brazed connections between tubes. Each torch carriage 112 can include an actuator or actuator system for rotating the brazing torches as they engage and disengage from the tubing to be brazed.

The operation of the actuators discussed above can be controlled by an electronic controller, such as a programmable logic controller (PLC), to automatically control the movements and spatial location and orientation of the brazing torches. Motion control by a PLC is well-known and need not be discussed in detail herein.

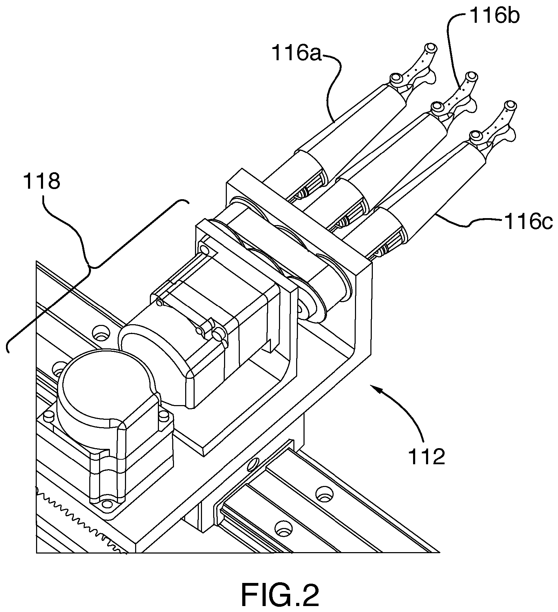

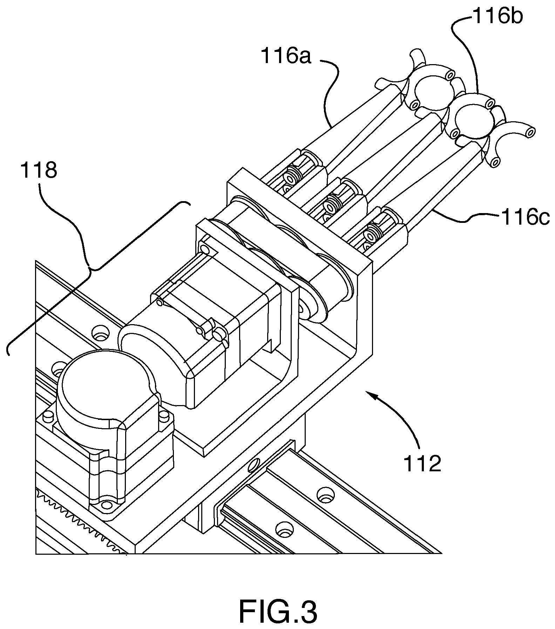

Figures 2 and 3 show the torch carriage 112 and the rotation of the brazing torches in more detail. Each torch carriage 112 can have one or more brazing torches attached thereto. For example, each torch carriage 112 can have multiple brazing torches, such as at least two brazing torches, that operate together. In the example embodiment shown, the torch carriage 112 has three brazing torches 116a, 16b, 116c; however, the torch carriage could have fewer or more than three brazing torches if desired. Figure 2 shows the torches 116a, 16b, 116c in a vertical or substantially vertical orientation or position, and Fig. 3 shows the torches rotated to a horizontal or substantially horizontal orientation or position. The torch carriage 112 can include an actuator system 118 having a servo motor, gears, and the like to rotate the torches 116a, 16b, 116c between the substantially vertical and horizontal positions. The torches 116a, 16b, 116c are connected to the torch carriage 112 at their respective proximal ends. At the distal end of each torch 116a, 16b, 116c is a flame tip or burner. The flame tip or burner is formed by two generally C-shaped portions oriented back-to-back, and along the inside of each of the concave C-shaped portions are a plurality of flame outlets. As will be discussed further below, the C-shaped portions on two adjacent torches operate together to make one brazed connection.

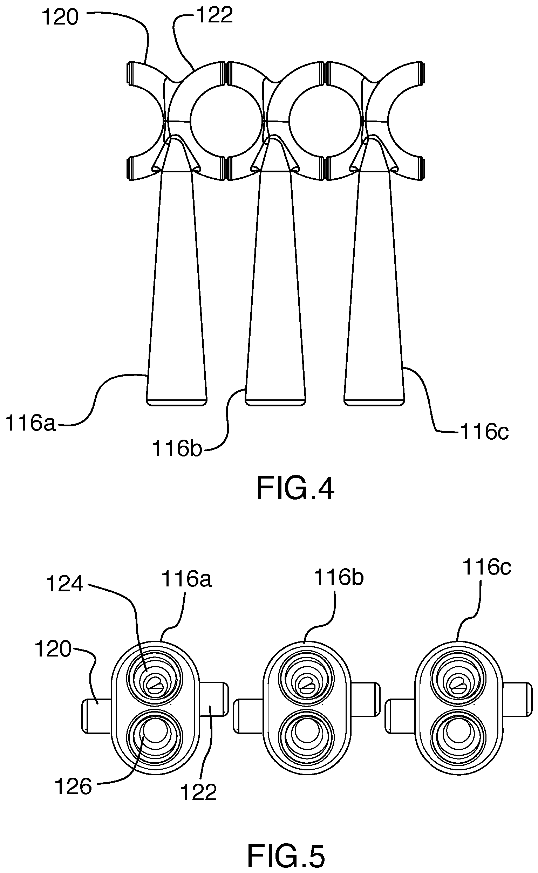

Figure 4 is a plan view of the brazing torches 116a, 116b, 116c and Fig. 5 is a proximal end elevation view of the torches. As noted above, each torch has flame tip or burner formed by two generally C-shaped portions 120, 122 oriented back-to-back so that one C-shaped portion 120 is open to the left side of the torch and one C-shaped portion is open to the right side of the torch. It can be seen that the two C-shaped portions of the center torch 116b cooperate with an opposing C-shaped portion on the adjacent torches 116a, 116c to form a generally ring-shaped heating element. In the example embodiment shown the drawings, the three brazing torches 116a, 116b, 116c, when rotated to their horizontal orientation, form two ring-shaped burners. The two ring-shaped burners can be activated simultaneously to make two brazed connections simultaneously using the torches (e.g., a double braze), or only one of the ring-shaped burners can be activated to make a single brazed connection. Additional ring-shaped burners can be added to a torch carriage by including additional torches.

As can be seen in Fig. 5, the C-shaped portions 120, 122 on a torch 116a are not located within the same horizontal plane, and that the C-shaped portion 122 that opens to the right side of the torch is slightly higher along the torch than the C-shaped portion that opens to the left side of the torch. Thus, the two C-shaped portions 120, 122 are slightly vertically offset from each other when the torch is in the horizontal orientation. The slight vertical offset provides greater clearance for rotation of the C-shaped portions 120, 122 around a tubular joint to be brazed. If the two C-shaped portions were located within the same horizontal plane, more space would be required for the torch to rotate cleanly. Due to the vertical offset between the C-shaped portions 120, 122, torch rotation from the vertical orientation to the horizontal orientation would be clockwise in the view of Fig. 5, and torch rotation from the horizontal orientation to the vertical orientation would be counterclockwise.

Each torch can have a separate gas inlet 124, 126 for supplying a mixture of fuel gas and combustion-assisting gas to a respective C-shaped portion of the torch tip. Each gas inlet 124, 126 is in fluid communication with the plurality of gas outlets of one of the C-shaped portions 120, 122. This allows either side of the torch tip (i.e., either or both of the C-shaped portions) to be ignited or extinguished individually. Each torch can have one or more igniters for igniting the gas mixture to generate the brazing flame.

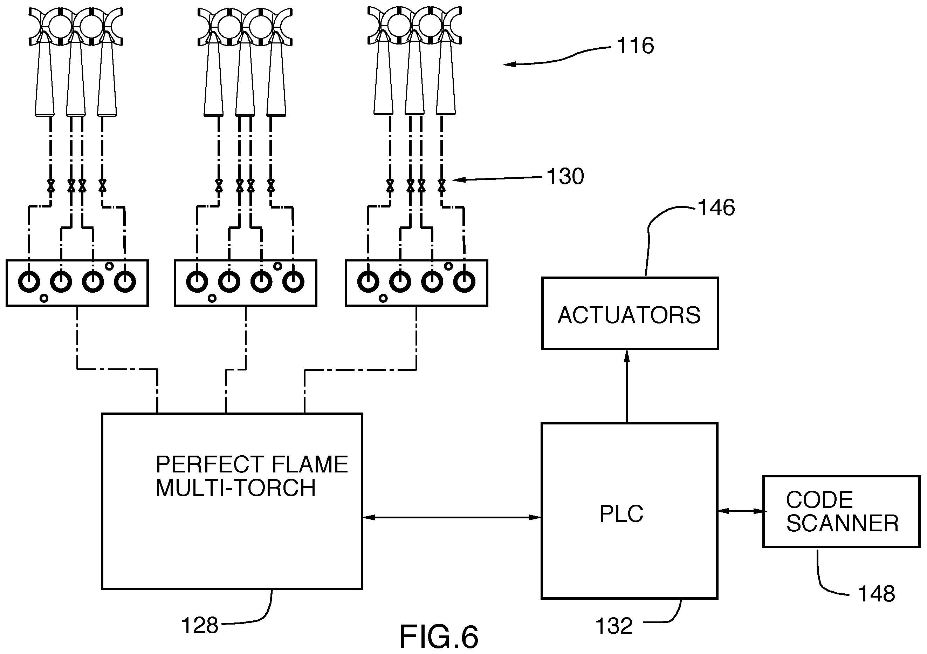

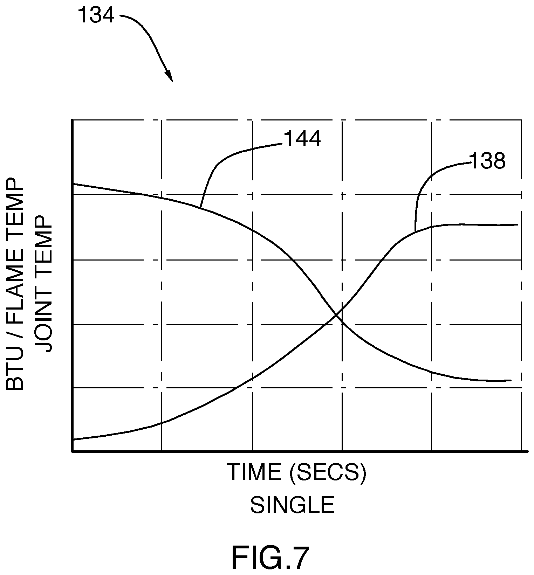

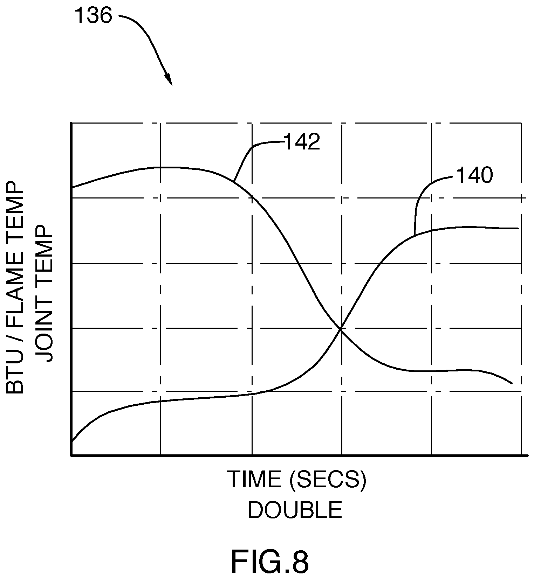

Figure 6 is a schematic block diagram of a portion of the brazing system. The system can include a mass flow controller (MFC) 128 that controls the operation of flow control valves 130 to control the flow of fuel gas and combustion-assisting gas to the torches 116. An example MFC 128 is the PERFECT FLAME mass flow controller available from The Harris Products Group of Mason, Ohio. The structure and operation of MFCs for brazing applications is well known and need not be discussed in detail herein. Such MFCs allow an operator or other controller, such as a PLC 132, to set the ratio of fuel gas to combustion-assisting (e.g., oxygen). During a brazing operation, the MFC 128 controls the operation of the flow control valves 130 to achieve a desired heating profile (e.g., heat amount or BTU over time) at the brazed joint. The MFC 128 can automatically adjust the gas flows to the torches to achieve the desired heating profile while maintaining the set gas ratio. For example, during brazing the MFC 128 can automatically reduce the gas flows to reduce the flame temperature so as not to overheat the brazed joint and damage the connected tubes while also heating the brazed joint to a desired final temperature. The MFC 128, or a connected PLC, can store multiple heating profiles, which can be selected for a particular brazing operation. For example, the MFC 128 could use a first heating profile when brazing a single connection using two adjacent torches, and use a second heating profile when brazing two adjacent connections simultaneously using a group of three torches. Figure 7 shows an example heating profile 134 for making a single brazed connection using two adjacent torches, and Fig. 8 shows an example heating profile 136 for making two adjacent brazed connections simultaneously using a group of three torches. Each heating profile 134, 136 has a joint temperature curve 138, 140 that ultimately reaches substantially the same joint temperature during brazing. However, it can be seen that more heat is added during the duration of brazing by the heating curve 142 for making two brazed connections than the heating curve 144 for making a single brazed connection. The MFC 128 can also have an idle mode that produces a very low flame output but maintains the set gas ratio.

In Fig. 6, the torches 116 are controlled in groups of three. To make a single brazed connection, one valve 130 of the center torch in a group of three torches will be opened and throttled during brazing, and one valve of the adjacent torch having a corresponding C-shaped portion to form a single ring-shaped burner will also be opened and throttled. To make a double braze or two adjacent brazed connections, both valves 130 of the center torch in a group of three torches will be opened and throttled during brazing, and one valve of each adjacent torch on either side of the center torch will also be opened and throttled to create two ring-shaped burners.

The PLC 132 can communicate bidirectionally with the MFC 128. For example, the PLC 132 can instruct the MFC 128 to execute different brazing operations using stored heating profiles based on the component to be brazed and/or the number of connections to be brazed at one time. The different brazing operations can include information on which torches 130 are to be activated and/or which torches are to remain deactivated during brazing. Thus, different parts, requiring different numbers of brazed connections to be made using different heat profiles, can be assembled using the disclosed brazing system. The PLC is operatively connected to the various actuators 146 of the brazing system discussed above, to control the movements of the table 106, shuttle 108, and torch carriages 112 and also the rotation of the torches 130 by the actuator system 118 (see Figs. 1-3) during brazing. An example sequence of torch movements that are controlled by the PLC 132 during a brazing operation are discussed further below.

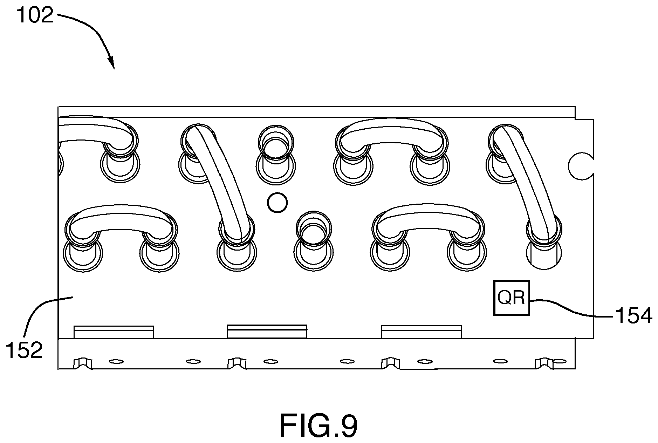

In certain embodiments, the brazing system can include a code scanner 148 or code reader to identify a part or object to be brazed by reading a code (e.g., barcode, QR code, etc.) located on the object. An example code scanner 148 is a 1D or 2D bar code reader, an RFID reader, and the like. The PLC 132 can identify the part to be brazed and inform the MFC 128 of the part and/or the brazing operation to be performed (e.g., which torches to activate and the heating profile(s) to be used based on the output from the code scanner 148). The code scanner 148 can be located along a manufacturing line upstream of the brazing system to identify parts as they move through production. Figure 9 shows a portion of an example part 102 to be brazed. The part 102 can be a heat exchanger coil. The heat exchanger coil has an end plate 152, and on the end plate is a 2D barcode 154 that is read by the code scanner 148 (Fig. 6) during manufacturing to identify the part 102.

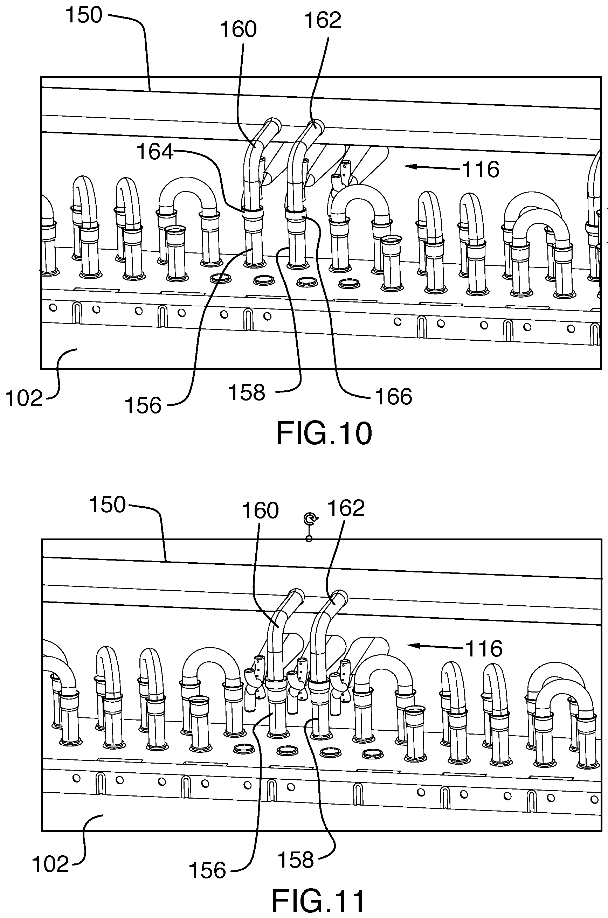

Figures 10 - 13 in combination with Figs. 1 and 2 illustrate example movements of three brazing torches 116 to perform a double braze to connect tubes 156, 158 of a heat exchanger coil 102 to tubes 160, 162 from a header 150. The motion of the torches 116 during the brazing operation is controlled by the PLC 132 via the actuators 146 (Fig. 6) as discussed above. When the heat exchanger coil 102 and the header 150 arrive at the brazing station, the torches116 are initially in a retracted position due to the shuttle 108 being located toward the rear of the table 106 (e.g., toward the stand 104). The torches 116 are also initially in their vertical orientation so that they can be pushed between the tubes of the heat exchanger coil 102. Brazing rings 164, 166 are located at the respective joints to provide filler metal for the brazing operation. The tubes 156, 158 are adjacent to each other and extend upward in the "Z" axial direction, which is the axial direction along which the table (which supports the torches) moves up and down or back and forth while brazing is occurring at the joints. Although three torches 116 are shown in Fig. 10, it is to be appreciated that the brazing system can include additional groups of torches (not shown) to simultaneously make brazed connections at other joints along the coil 102 and header 150.

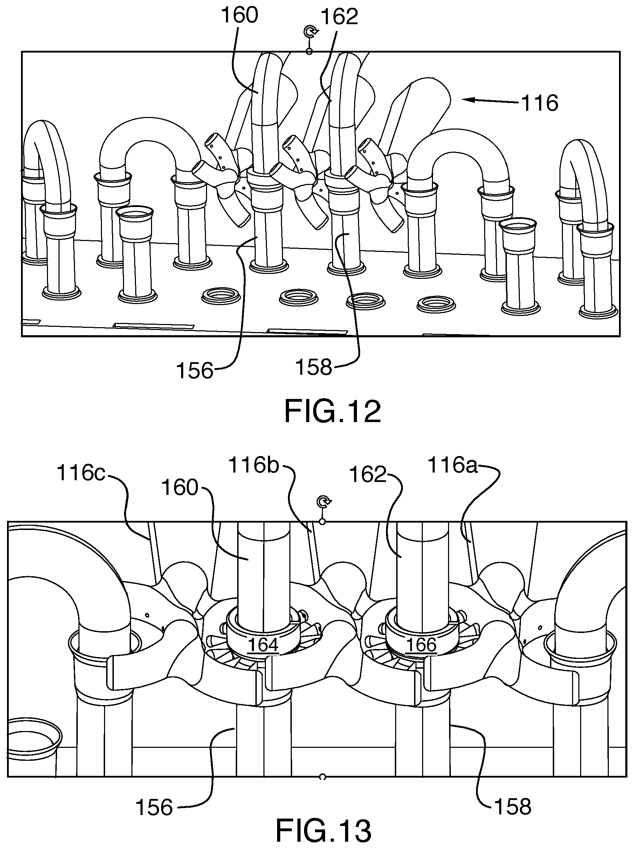

In Fig. 11, the torches 116 are still in their vertical orientation, but they are now located between the tubes of the heat exchanger coil 102 due to the shuttle 108 moving forward to the front of the table 106 and toward the heat exchanger coil. In Fig. 12, the torches are partially rotated between their vertical orientation and their horizontal orientation by the actuator system 118 on the torch carriage 112. Figure 13 shows the torches 116a, 116b, 116c fully rotated to their horizontal orientation in order to form ring-shaped burners to braze the tubes 156, 158, 160, 162. Flames are produced by both of the C-shaped portions of the center torch 116b, and by one of the C-shaped portions on each of the outer torches 116a, 116c, to form two generally ring-shaped burners. In an example brazing operation, the joint areas below the brazing rings 164, 166 are heated first. The table 106 is then raised to heat the joint areas above the brazing rings 164, 166. The table 106 is then lowered to heat the brazing rings 164, 166, and finally the table is further lowered to pull the melted filler material downward into the joints. The table 106 moves vertically up and down (back and forth) during the brazing operation to adjust the respective positions of the brazing torches along the tubes during the brazing operation performed on the heat exchanger coil, to distribute heat along the tubes. Upon completion of the desired heating profile and torch movements, the torches are rotated to their vertical orientation and retracted away from the heat exchanger coil 102 so that the coil can be removed from the brazing station.

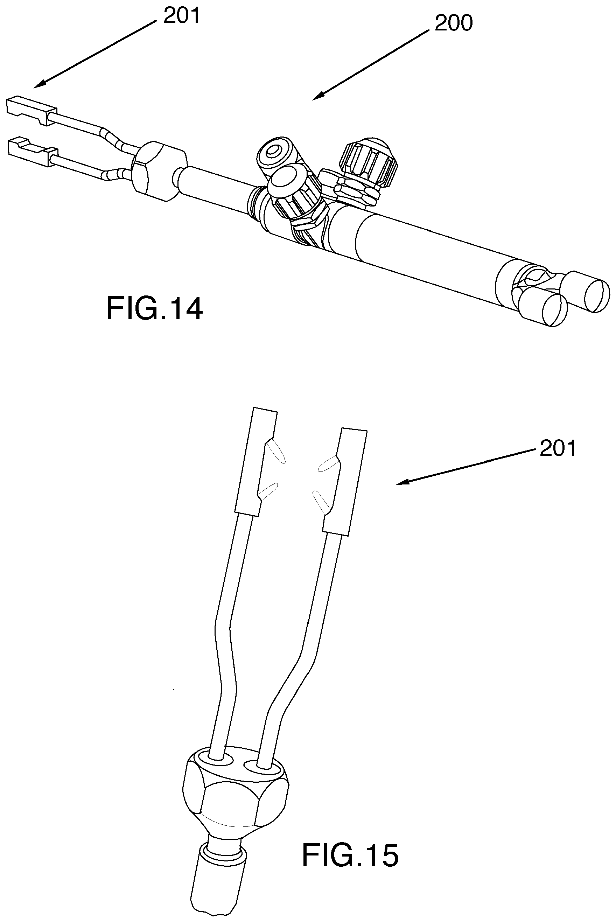

Figure 14 shows an example embodiment of a brazing torch 200 that does not need to be rotated during the brazing operation. The torch 200 can be extended and retracted between the tubes to be brazed without needing to rotate the torch. The brazing torch 200 can braze either one of two joints individually or both. Additionally, the brazing torch 200 offers more clearance between the torch tip and the braze joint as compared to other torches discussed herein. In certain embodiments a portion of one brazing torch (e.g., a right side) and a portion of another brazing torch (e.g., a left side) are located between the first tube and the second tube during the brazing operation. The brazing torch 200 can be a conventional brazing torch with valves to control the flow of fuel gas and combustion-assisting gas. The torch tip 201 can include two burners for directing heating flames circumferentially around a tube to be brazed. Figure 15 shows that the torch tip 201 can have flame outlets that direct the heating flames generally uniformly around a tube. In the example embodiment of Fig. 15, the torch tip 201 has four flames/flame outlets spaced approximately ninety degrees apart to surround a tube to be brazed so that the tube is generally uniformly heated during brazing.

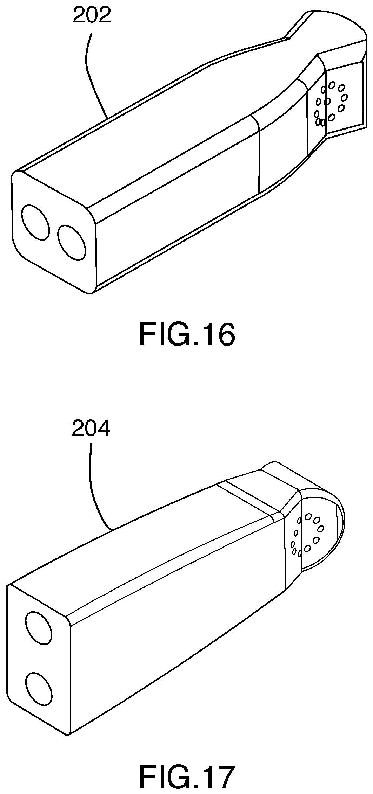

Figures 16 and 17 show two example embodiments of flame tips or burners 202, 204 for brazing torches. The flame tips or burners 202, 204 are less C-shaped than those discussed above. However, they both still produce flames oriented back-to-back to braze adjacent tubes. In Fig. 16, the gas inlets to the flame tips or burners 202, 204 are oriented horizontally, and in Fig. 17 they are oriented vertically to reduce the width of the burners.

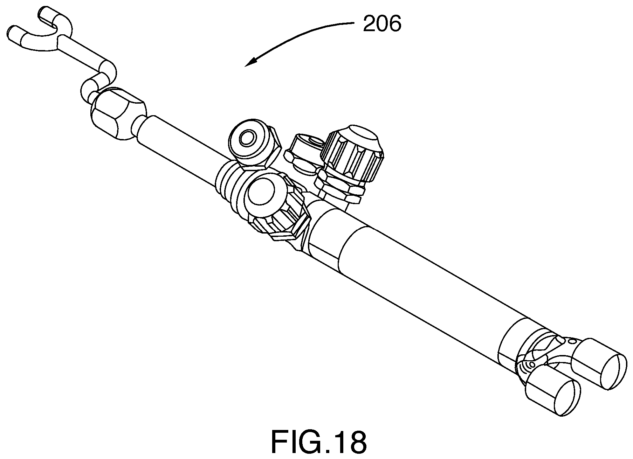

Figure 18 shows an example embodiment of a brazing torch 206 having a U-shaped flame tip or burner. The torch 206 can be extended and retracted between the tubes to be brazed without needing to rotate the torch. The gas orifices on the burner can be angled to create a flame that properly encompasses the area to be brazed.

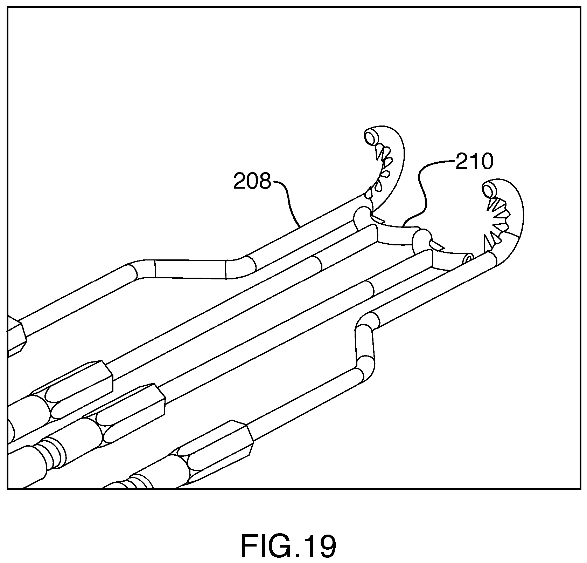

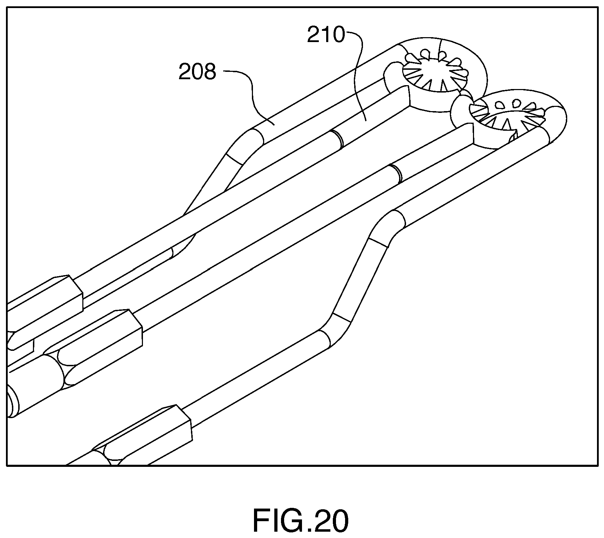

Figures 19 and 20 show an example embodiment of a group of four brazing torches wherein the two inner torches 210 do not rotate but extend and retract, and the adjacent outer torches 208 rotate to surround the tubes to be brazed. The outer torches 208 are oriented generally vertically in Fig. 19 during extension and retraction, and then are rotated to a generally horizontal position shown in Fig. 20 for brazing. It is to be appreciated that portions of the two inner torches 210 and portions of the two outer torches can be located between adjacent tubes that are brazed during the brazing operation.

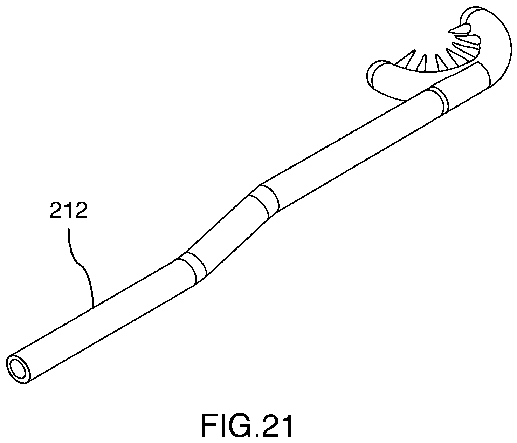

Figure 21 shows an example of a brazing torch 212 having a single C-shaped flame tip or burner for brazing one lateral side of a heat exchanger tube. The brazing torch 212 can be used with a corresponding adjacent torch (e.g., having a burner facing the opposite direction) for making a complete brazed connection around a heat exchanger tube.

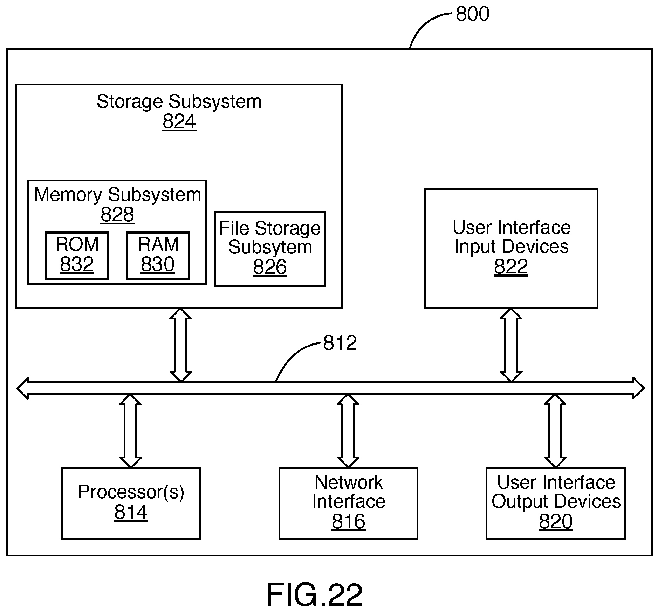

Figure 22 illustrates an embodiment of an example controller 800 of the brazing system (e.g., a controller of the PLC and/or MFC). The controller 800 includes at least one processor 814 which communicates with a number of peripheral devices via bus subsystem 812. These peripheral devices may include a storage subsystem 824, including, for example, a memory subsystem 828 and a file storage subsystem 826, user interface input devices 822, user interface output devices 820, and a network interface subsystem 816. The input and output devices allow user interaction with the controller 800. Network interface subsystem 816 provides an interface to outside networks and is coupled to corresponding interface devices in other computer systems.

User interface input devices 822 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 800 or onto a communication network.

User interface output devices 820 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 800 to the user or to another machine or computer system.

Storage subsystem 824 provides a non-transitory, computer-readable storage medium that stores programming and data constructs that provide the functionality of some or all of the software operations described herein. For example, the storage subsystem 824 may include programmed torch movements, heating profiles, etc.

These software operations are generally executed by processor 814 alone or in combination with other processors. Memory 828 used in the storage subsystem can include a number of memories including a main random access memory (RAM) 830 for storage of instructions and data during program execution and a read only memory (ROM) 832 in which fixed instructions are stored. A file storage subsystem 826 can provide persistent storage for program and data files, and may include solid state memory, a hard disk drive, a floppy disk drive along with associated removable media, a CD-ROM drive, an optical drive, flash memory, or removable media cartridges. The modules implementing the functionality of certain embodiments may be stored by file storage subsystem 826 in the storage subsystem 824, or in other machines accessible by the processor(s) 814.

Bus subsystem 812 provides a mechanism for letting the various components and subsystems of the controller 800 communicate with each other as intended. Although bus subsystem 812 is shown schematically as a single bus, alternative embodiments of the bus subsystem may use multiple buses.

The controller 800 can be of varying types including a workstation, server, computing cluster, blade server, server farm, or any other data processing system or computing device. Due to the ever-changing nature of computing devices and networks, the description of the controller 800 depicted in Fig. 22 is intended only as a specific example for purposes of illustrating some embodiments. Many other configurations of the controller 800 are possible having more or fewer components than the controller depicted in Fig. 22.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

## Claims

1. A brazing system, comprising:
a stand;
a table moveable along the stand in a first axial direction;
a shuttle movable along the table in a second axial direction toward and away from an object having a first tube extending in the first axial direction, and a second tube adjacent to the first tube and also extending in the first axial direction, wherein the second axial direction is perpendicular to the first axial direction;
a torch carriage positionable along the shuttle in a third axial direction perpendicular to the first axial direction and the second axial direction;
a first brazing torch attached to the torch carriage and configured for making a first brazed connection along the first tube; and
a second brazing torch attached to the torch carriage and configured for making a second brazed connection along the second tube while the first brazed connection is made,
wherein the table automatically moves back and forth in the first axial direction while the first and second brazed connections are made, to adjust respective positions of the first brazing torch along the first tube and the second brazing torch along the second tube during a brazing operation performed on the object.

2. A brazing system, comprising:
a stand;
a table supported by the stand;
a shuttle movable along the table in a first direction;
a torch carriage positionable along the shuttle in a second direction perpendicular to the first direction;
a first brazing torch attached to the torch carriage and configured for making a first brazed connection along a first tube;
a second brazing torch attached to the torch carriage and configured for making a second brazed connection along a second tube that is adjacent to the first tube; and
a mass flow controller configured to control respective flows of gas to each of the first brazing torch and the second brazing torch, wherein the mass flow controller controls the respective flows of gas based on either a first heating profile for making a single brazed connection using only one of the first brazing torch and the second brazing torch, and a second heating profile for making two brazed connections simultaneously using both of the first brazing torch and the second brazing torch.

3. A brazing system, comprising:
a first brazing torch;
a second brazing torch;
a third brazing torch;
a torch carriage having an actuator system configured to rotate the first brazing torch, the second brazing torch, and the third brazing torch simultaneously from a substantially vertical orientation to a substantially horizontal orientation; and
a mass flow controller configured to control respective flows of gas to each of the first brazing torch, the second brazing torch, and the third brazing torch, wherein the mass flow controller controls the respective flows of gas based on either a first heating profile for making a single brazed connection using two of the first brazing torch, the second brazing torch, and the third brazing torch, and a second heating profile for making two brazed connections simultaneously using each of the first brazing torch, the second brazing torch, and the third brazing torch.

4. The brazing system of claim 3, further comprising:
a stand;
a table supported by the stand; and
a shuttle movable along the table in a first direction, wherein the torch carriage is positionable along the shuttle in a second direction perpendicular to the first direction.

5. The brazing system of claim 4, wherein the table automatically moves the first brazing torch, the second brazing torch, and the third brazing torch upward and downwarc during a brazing operation.

6. A brazing system, comprising:
a stand;
a table supported by the stand;
a shuttle movable along the table in a first direction;
a torch carriage positionable along the shuttle in a second direction perpendicular to the first direction;
a brazing torch attached to the torch carriage and configured for making a brazed connection along a tube; and
a mass flow controller configured to control a flow of gas to the brazing torch,
wherein the mass flow controller controls the flow of gas based on either a first heating profile for making a single brazed connection using only the brazing torch, and a second heating profile for making two brazed connections simultaneously using both of the brazing torch and a second brazing torch.

7. The brazing system of claim 1 or 2 or 4 or 5 or 6, wherein a position of the torch carriage along the shuttle is manually adjustable.

8. The brazing system of any of the previous claims, further comprising a code scanner for identifying the object to be brazed by reading a code located on the object.

9. The brazing system of claim 8, wherein the object is a heat exchanger coil.

10. The brazing system of any of the previous claims, wherein the first brazing torch and the second brazing torch each have a plurality of flame outlets.

11. The brazing system of any of the previous claims, wherein a portion of the first brazing torch and a portion of the second brazing torch are located between the first tube and the second tube during the brazing operation.

12. The brazing system of claim 2, wherein each of the first brazing torch, the second brazing torch, and the third brazing torch has a plurality of flame outlets.

13. The brazing system of any of the previous claims, further comprising a mass flow controller configured to control respective flows of gas to the first brazing torch and the second brazing torch during the brazing operation.

14. The brazing system of any of the previous claims, wherein the table of claim 2 or 4 or 6 automatically moves the first brazing torch and the second brazing torch up and down during a brazing operation to adjust respective positions of the first brazing torch along the first tube and the second brazing torch along the second tube during a brazing operation.
